# EUROPÄISCHE PATENTSCHRIFT

(11) **EP 2 894 355 B1**
(45) Veröffentlichungstag und Bekanntmachung des Hinweises auf die Patenterteilung: **07.09.2016**
(21) Anmeldenummer: 14150818.4
(22) Anmeldetag: 10.01.2014
(51) Int. Cl.: F16B 13/12

(54) **Mehrteiliger Dämmstoffanker mit Rastverschluss**
Multi-part insulating material anchor with snap fastener
Cheville d'isolation crantée en plusieurs parties

(43) Veröffentlichungstag der Anmeldung: 15.07.2015
(73) Patentinhaber: HILTI Aktiengesellschaft, 9494 Schaan (LI)
(72) Erfinder: Brunhuber, Thomas, 6811 Göfis (AT); Boeckle, Juergen, 9494 Schaan (LI); Rosenkranz, Falk, 9658 Wildhaus (CH); Turski, Martin, 8880 Walenstadt (CH)
(74) Vertreter: Hilti Aktiengesellschaft Corporate Intellectual Property

(56) Entgegenhaltungen:
- DE-U1- 9 410 723
- DE-U1-202008 003 690

## Beschreibung

Die Erfindung betrifft einen Dämmstoffanker gemäss dem Oberbegriff des Anspruchs 1. Ein solcher Dämmstoffanker ist ausgestattet mit einem Ankerteil, welches im Bereich seines vorderen Endes einen Verankerungsbereich zum Verankern an einem Bohrloch und im Bereich seines entgegengesetzten rückwärtigen Endes einen radial nach aussen vorstehenden Bund aufweist, und einem Halteteil zum Sichern einer Dämmstoffplatte am Dämmstoffanker, wobei das Halteteil aufweist: einen Durchgangskanal zum bereichsweisen Aufnehmen des Ankerteils, am rückwärtigen Ende des Halteteils eine Einführöffnung zum Einführen des Ankerteils und des am Ankerteil angeordneten Bundes in den Durchgangskanal und im Bereich des dem rückwärtigen Ende des Halteteils entgegengesetzten vorderen Endes des Halteteils ein, insbesondere radial in den Durchgangskanal vorstehendes, Anschlagelement für den in den Durchgangskanal eingeführten Bund des Ankerteils.

Beispielsweise aus der DE 10 2004 038 031 A1 ist ein Dämmstoffanker bekannt, mit dem Dämmstoffplatten an einem Bohrloch in einer Gebäudewand gesichert werden können. Gemäss DE 10 2004 038 031 A1 ist der Dämmstoffanker zweiteilig ausgeführt und weist einerseits ein längliches Ankerteil auf, das zum Verankern in einem Bohrloch von einem Spreizkörper radial aufgeweitet werden kann, und andererseits ein hiervon separates Halteteil mit einem Teller, welches die Dämmstoffplatte sichert. Diese zweiteilige Ausführung eröffnet bei geringem Herstellungsaufwand ein besonders grosses Anwendungsspektrum. So können beispielsweise unterschiedlich bemessene, unterschiedlich eingefärbte und/oder unterschiedlich materialbeschaffene Halteteile mit demselben Typ Ankerteil kombiniert werden, so dass Dämmstoffanker mit deutlich verschiedenen Eigenschaften erhalten werden können, ohne dass der Herstellungsprozess für das Ankerteil hierzu geändert werden müsste. Das Ankerteil und das Halteteil sind gemäss DE 10 2004 038 031 A1 über einen Rastverschluss aneinander gekoppelt, bei dem eine Rastnase am Halteteil zwischen zwei am Schaft axial beabstandet vorgesehene Rasten einrastet.

Weiterhin sind mehrteilige Dämmstoffanker bekannt, die eine Teleskopfunktion zur Verfügung stellen, und die daher längenverstellbar sind. Einen teleskopierbaren mehrteiligen Dämmstoffanker beschreibt beispielsweise die DE 94 107 23 U1. Gemäss DE 94 107 23 U1 weist das Schaftelement einen Ringwulst und das Halteteil eine korrespondierende Auflageschulter auf, die einen Anschlag für die Ringwulst bildet und daher die Teleskopbewegung begrenzt.

Ein anderer mehrteiliger teleskopierbarer Dämmstoffanker geht aus der DE 19637581 A1 hervor. Bei diesem Dämmstoffanker ist am Druckteller unterseitig ein hülsenförmiger Abschnitt angeformt, dessen Innenseite eine Rillung aufweist. In diesen Abschnitt ist ein Schaftelement eingeführt, welches aussenseitig ebenfalls eine Rillung aufweist. Durch Ineinander-greifen der beiden Rillungen sind die beiden Teile gehalten. Durch Eindrücken des Drucktellers ist dieser bezüglich seines Abstandes zum Spreizkörper teleskopartig bewegbar, wobei die Rillungen durch Einrasten die jeweilige Stellung fixieren.

Die DE 10 2006 032 445 B4 beschreibt weitere mehrteilige teleskopierbare Dämmstoffanker. Gemäss DE 10 2006 032 445 B4 ist eine Rastverbindung vorgesehen, die aufgehoben wird, wenn eine bestimmte Grenzkraft überschritten wird. Die Rastverbindung wird nach der DE 10 2006 032 445 B4 insbesondere durch zwei Rastelemente am Ankerschaft gebildet, zwischen die eine am unteren Ende des Halteteils mit dem Teller angeordnete Rastvorrichtung einrastet.

Noch weitere mehrteilige Dämmstoffanker mit Teleskopfunktion sind in der DE 10041299 A1 beschrieben. Zur Verbindung der beiden Teile kann das Ankerteil gemäss DE 10041299 A1 einen endseitigen umlaufenden Wulst aufweisen, der in eine Nut im Halteteil eingreift.

Die EP 1457688 A1 offenbart einen Dämmstoffanker mit einer Stauchzone, in welcher der Anker axial stauchbar ist. Die EP 1318250 A2 beschreibt einen weiteren Dämmstoffanker. Dieser weist an der Unterseite des Drucktellers an dessen Umfang Schneidvorrichtungen zum Einschneiden der Dämmstoffplatte beim Einziehen des Drucktellers in die Dämmstoffplatte unter gleichzeitiger Kompression derselben auf. Die EP 1298330 A2 betrifft Dämmstoffdübel, bei denen das Spreizelement zum Aufspreizen des Dübels zumindest teilweise komplementär zum Hohlschaft ausgebildet ist.

Aufgabe der Erfindung ist es, einen mehrteiligen Dämmstoffanker mit Rastverschluss zwischen Halteteil und Ankerteil anzugeben, der einerseits besonders zuverlässig und andererseits besonders günstig herzustellen ist.

Die Aufgabe wird erfindungsgemäss durch einen Dämmstoffanker mit den Merkmalen des Anspruchs 1 gelöst. Bevorzugte Ausführungsformen sind in den abhängigen Ansprüchen angegeben.

Ein erfindungsgemässer Dämmstoffanker ist dadurch gekennzeichnet, dass das Halteteil zumindest eine Rastnase zum Hemmen einer Axialbewegung des Bundes des Ankerteils vom Anschlagelement hinweg, das heisst insbesondere nach hinten, aufweist, wobei die Rastnase radial in den Durchgangskanal vorsteht. Insbesondere kann somit die Rastnase ein ungewolltes Einteleskopieren des Ankerteils, welches mit dem Bund verbunden ist, in das Haltelement hinein verhindern.

Gemäss der Erfindung ist ein mehrteiliger Anker vorgesehen, bei dem das Ankerteil von der Rückseite des Halteteiles her, also insbesondere von der Seite her, welche bei gesetztem Anker vom Bohrloch weg weist, in das Halteteil einführbar ist. Dies ist fertigungstechnisch besonders vorteilhaft, da bei einer solchen Ausgestaltung in besonders einfacher Weise eine Selbstzentrierung des Ankerteils im Halteteil realisiert werden kann. Ein Grundgedanke der Erfindung kann nun in einer besonderen Ausführung des Rastverschlusses zwischen Ankerteil und Halteteil für einen solchen Anker gesehen werden. Dieser Rastverschluss wird erfindungsgemäss durch zwei axial versetzt am Halteteil angeordnete und radial nach innen vorstehende Körper, nämlich das Anschlagelement und die Rastnase, und einen am Ankerteil radial nach aussen vorstehenden Körper, nämlich den Bund, gebildet, wobei der Bund im verrasteten Zustand zwischen den axial versetzt am Halteteil angeordneten Körpern angeordnet ist. Eine solche Ausführung hat mehrere Vorteile. So kann nach der Erfindung beispielsweise die Verrastung ausschliesslich oder vorwiegend durch Körper gebildet werden, die sich bei zusammengefügtem Anker im Inneren des Halteteils befinden, und die daher besonders gut gegen externe Einflüsse geschützt sind. Daher kann eine besonders zuverlässige Verrastung realisiert werden. Darüber hinaus kann eine bei Zuglasten besonders biegesteife Verbindung zwischen Ankerteil und Halteteil verwirklicht werden, bei der insbesondere das Rastelement des Halteteils rückseitig am Bund des Ankerteils anliegen kann, so dass besonders hohe Zuglasten realisiert werden können. Da ferner die rückwärtige Verrastung durch eine lokal begrenzte Rastnase gewährleistet wird, kann die beim Einführen des Ankerteils in das Halteteil auftretende Verformung der Elemente besonders kleinräumig sein, was fertigungstechnisch vorteilhaft sein kann.

Erfindungsgemäss steht die Rastnase radial in den Durchgangskanal vor. Insbesondere kann die Rastnase in Axialrichtung betrachtet ein lokales Höhenmaximum bilden, und sowohl axial vorderseitig als auch axial rückseitig eine Schulter bilden.

Der Durchgangskanal verläuft, insbesondere in Axialrichtung und/oder koaxial zur Längsachse des Ankers, durch das Halteteil hindurch. Die Einführöffnung im rückwärtigen Bereich des Halteteils ist zweckmässigerweise so querschnittsgross, dass der am Ankerteil angeordnete Bund, bevorzugt verformungsfrei, durch die Einführöffnung hindurch in den Durchgangskanal eingeführt werden kann. Der Durchgangskanal ist nach der Erfindung so dimensioniert, dass der Bund ausgehend von der Einführöffnung im rückwärtigen Bereich des Halteteils im Inneren des Halteteils axial bis zum Anschlagelement hin verschoben werden kann. Der Durchgangskanal ist also so dimensioniert, dass das Ankerteil mit seinem vorderen Ende voraus an der Einführöffnung am rückwärtigen Ende des Halteteils in den Durchgangskanal eingeführt werden kann und so weit relativ zum Halteteil verschoben werden kann, bis der Bund des Ankerteils am Anschlagelement anschlägt. Bei dieser Verschiebung tritt das vordere Ende des Ankerteils wieder aus dem Halteteil hervor. Das Anschlagelement kann insbesondere so ausgeführt werden, dass es der am Ankerteil angeordnete Bund nicht ohne plastische Verformung von Bund oder/und Anschlagteil passieren kann. Die Erfindung kann sowohl den Vormontagezustand, bei dem das Ankerteil und das Halteteil getrennt sind, als auch den zusammengefügten Zustand des Dämmstoffankers umfassen, bei dem das Ankerteil im Bereich seines rückwärtigen Endes im Durchgangskanal des Halteteils aufgenommen ist und insbesondere der Bund des Ankerteils am Anschlagelement des Halteteils anliegt.

Soweit hier von radial, axial oder Umfangsrichtung die Rede ist, kann sich dies insbesondere auf die Längsachse des Dämmstoffankers, des Ankerteils und/oder des Halteteils beziehen. Das Ankerteil und/oder das Halteteil können vorzugsweise aus einem Kunststoffmaterial bestehen. Der Bund ist bevorzugt zumindest in Axialrichtung fest am Ankerteil angeordnet und vorzugsweise einstückig mit dem Ankerteil ausgebildet. Das Anschlagelement und/oder die Rastnase ist bevorzugt zumindest in Axialrichtung fest am Halteteil angeordnet und vorzugsweise einstückig mit dem Halteteil ausgebildet.

Das vordere Ende des Halteteils ist bei zusammengefügtem Dämmstoffanker dem Verankerungsbereich des Ankerteils zugewandt und das rückwärtige Ende des Halteteils dem Verankerungsbereich abgewandt. Bei gesetztem Anker befindet sich der Verankerungsbereich am vorderen Ende des Ankerteils zumindest bereichsweise im Bohrloch und der entgegengesetzte rückwärtige Endbereich des Ankerteils mit dem Bund steht aus dem Bohrloch heraus. Das vordere Ende des Halteteils ist dann dem Bohrloch zugewandt und das rückwärtige Ende abgewandt. Das vordere Ende des Ankerteils und das vordere Ende des Halteteils weisen bei zusammengefügtem Dübel in dieselbe Richtung.

Der Bund kann vorzugsweise durchgehend ringförmig, aber auch unterbrochen ringförmig, ausgebildet sein. Zusätzlich oder alternativ kann das Anschlagelement durchgehend ringförmig, aber auch unterbrochen ringförmig, ausgebildet sein. Das Anschlagelement weist vorzugsweise eine ringförmige und insbesondere senkrecht zur Längsachse, das heisst radial verlaufende Anschlagfläche für den Bund auf. Der Bund weist zweckmässigerweise eine ringförmige und/oder radial verlaufende Kontaktfläche zum Anschlag an der der Anschlagfläche des Bundes auf.

Besonders bevorzugt ist es, dass die Rastnase zum Hemmen der Axialbewegung des Bundes des Ankerteils vom Anschlagelement hinweg durch unmittelbaren Kontakt der Rastnase mit dem Bund vorgesehen ist. Demgemäss kann die Rastnase bei zusammengefügtem Anker unmittelbar gegen den Bund wirken. Dies ermöglicht eine konstruktiv besonders einfache Ausgestaltung. Grundsätzlich könnte die Rastnase aber beispielsweise auch gegen einen vom Bund axial vorstehenden Schaftfortsatz wirken.

Vorzugsweise kann vorgesehen sein, dass der Bund spielfrei, das heisst insbesondere ohne axialen Freiraum, zwischen dem Anschlagelement und der Rastnase aufgenommen ist. Hierdurch kann eine besonders steife und damit tragfähige und zuverlässige Verrastung erzielt werden. Besonders bevorzugt ist es, dass die Rastnase den Bund gegen das Anschlagelement drängt. Gemäss dieser Ausführungsvariante kann die Verrastung im zusammengefügten Zustand eine innere Spannung aufweisen. Diese kann beispielsweise sicherstellen, dass die Spielfreiheit auch bei variierenden Umgebungsbedingungen gegeben ist.

Eine weitere zweckmässige Ausgestaltung liegt darin, dass mehrere Rastnasen vorgesehen sind. Soweit in dieser Beschreibung Merkmale im Zusammenhang mit nur einer Rastnase genannt sind und mehrere Rastnasen vorgesehen sind, können die im Zusammenhang mit der einen Rastnase genannten Merkmale für genau eine Rastnase, für einen Teil der Rastnasen oder für sämtliche Rastnasen gelten. Vorzugsweise können die Rastnasen auf einem Ring angeordnet sein, der insbesondere koaxial zur Längsachse verläuft. Die Rastnasen können einen unterbrochenen Ring bilden.

Weiterhin ist es vorteilhaft, dass der Bund endseitig am Ankerteil angeordnet ist. Gemäss dieser Ausführungsform, bei der das Ankerteil lediglich an einer Seite vom Bund vorsteht, kann bei besonders geringem Materialeinsatz eine besonders kompakte und zuverlässige Anordnung erhalten werden.

Insbesondere kann vorgesehen sein, dass der Bund einen Anschlag für den Kopf eines Spreizkörpers zum Aufspreizen des Verankerungsbereichs bildet. Gemäss dieser Ausführungsform hat der Bund eine Doppelfunktion, welche die Betriebszuverlässigkeit beim Setzen des Dämmstoffankers weiter erhöhen kann.

Weiterhin ist es zweckmässig, dass der Durchgangskanal am Anschlagelement ein globales Querschnittsminimum aufweist. Demgemäss ist also der Querschnitt des Durchgangskanals am Anschlagelement am kleinsten. Gemäss dieser Variante können die beiden Teile des Ankers besonders einfach zusammengefügt werden.

Besonders bevorzugt ist es, dass das Halteteil, bevorzugt rückseitig, einen Halteteller für die Dämmstoffplatte aufweist. Alternativ oder zusätzlich können am Halteteil auch andere Halt-elemente für die Dämmstoffplatte vorgesehen sein, beispielsweise radial abstehende Haltefinger. Bei der Dämmstoffplatte kann es sich beispielweise um eine Schaumstoffplatte oder um eine Faserplatte handeln.

Grundsätzlich könnte der Dämmstoffanker ein Nagel sein, welcher allein durch Einbringen des Verankerungsbereichs in das Bohrloch aufgrund der Eigenelastizität des Verankerungsbereichs im Bohrloch gesichert wird. Besonders bevorzugt ist es jedoch, dass der Dämmstoffanker ein Dübel ist, welcher durch radiales Aufweiten des Verankerungsbereichs im Bohrloch gesichert wird. Insbesondere kann das Ankerteil einen Spreizkanal zum Einführen eines Spreizkörpers zum Aufspreizen des Verankerungsbereichs aufweisen. Der Spreizkanal verläuft zweckmässigerweise ausgehend vom rückwärtigen Ende des Ankerteils in Axialrichtung im Inneren des Ankerteils bis zum Verankerungsbereich. Der Spreizkörper zum Beispiel kann ein Nagel oder eine Schraube sein.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung einer Ausführungsform eines erfindungsgemässen Dämmstoffankers;
- Figur 2:: eine Längsschnittansicht des Ankers aus Figur 1 in einer ersten Schnittebene;
- Figur 3:: eine Detailansicht Y gemäss Figur 2;
- Figur 4:: eine Detailansicht W gemäss Figur 3;
- Figur 5:: eine Längsschnittansicht des Ankers aus Figur 1 in einer zweiten Schnittebene, senkrecht zur Schnittebene aus Figur 2; und
- Figur 6:: eine Detailansicht Z gemäss Figur 5.

Die Figuren zeigen ein Ausführungsbeispiel eines erfindungsgemässen Dämmstoffankers im zusammengefügten Zustand. Der Dämmstoffanker weist ein Halteteil 4 auf, welches aus einem Hülsenteil 48 und einem Halteteller 49 für eine Dämmstoffplatte besteht, wobei der Halteteller 49 am rückwärtigen Ende des Hülsenteils 48 angeordnet ist. Durch das Halteteil 4 läuft ein Durchgangskanal 41 in Axialrichtung hindurch, welcher sowohl am axial vorderen Ende 83 als auch am axial rückwärtigen Ende 84 des Halteteils 4 nach aussen hin offen ist.

Der Dämmstoffanker weist ferner ein schaftartiges Ankerteil 2 auf. Im Inneren des Ankerteils verläuft ein Spreizkanal 60, der sich ausgehend vom axial rückwärtigen Ende 82 des Ankerteils 2 bis in einen Verankerungsbereich 30 hinein erstreckt, welcher im Bereich des axial vorderen Ende 81 des Ankerteils 2 ausgebildet ist. Durch Einschieben eines beispielhaft als Nagel dargestellten Spreizkörpers 61 in den Spreizkanal 60 bis zum Verankerungsbereich 30 kann das Ankerteil 2 im Verankerungsbereich 30 radial aufgeweitet werden und damit das Ankerteil 2 in einem Bohrloch festgelegt werden.

Am axial rückwärtigen Ende 82 des Ankerteils 2 ist ein Bund 21 angeordnet, der radial vom Ankerteil 2 nach aussen vorsteht. An diesem Bund 21 ist der Aussenquerschnitt des Ankerteils 2 maximal. Der Bund 21 ist vorzugsweise ringförmig ausgebildet.

Am axial vorderen Ende 83 des Halteteils 4 ist am Hülsenteil 48 ein ringförmiges Anschlagelement 44 vorgesehen, welches radial nach innen in den Durchgangskanal 41 hineinragt und einen Anschlag für den Bund 21 des Ankerteils 2 bildet. Auf Höhe des Anschlagelements 44 verjüngt sich das Halteteil 4 aussenseitig zu seinem vorderen Ende 83 hin.

Beim Zusammenfügen des Dämmstoffankers wird das Ankerteil 2 mit seinem vorderen Ende 81 voran und dem rückwärtigen Ende 82 mit dem Bund 21 zuletzt durch eine am rückwärtigen Ende 84 des Halteteils 4 ausgebildete Einführöffnung 42 in den Durchgangskanal 41 eingeführt und so lange weiter relativ zum Halteteil 4 axial verschoben, bis das vordere Ende 81 des Ankerteils 2 mit dem Verankerungsbereich 30 am vorderen Ende 83 des Halteteils 4 wieder aus dem Halteteil 4 austritt und der Bund 21 des Ankerteils 2 schliesslich am Anschlagelement 44 des Halteteils 4 anschlägt. Dieser zusammengefügte Zustand ist in den Figuren gezeigt. Der Durchgangskanal 41 ist also insbesondere so dimensioniert, dass er eine Passage des am Ankerteil 2 angeordneten Bundes 21 von aussen in das rückwärtige Ende des Durchgangskanals 41 hinein und weiter bis zum Anschlagelement 44 hin erlaubt.

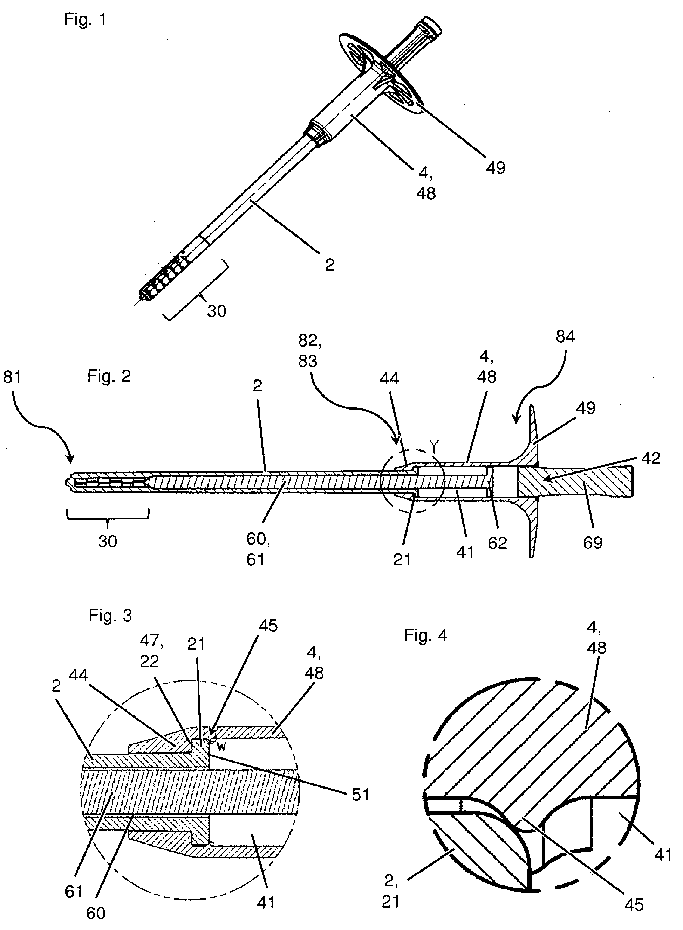

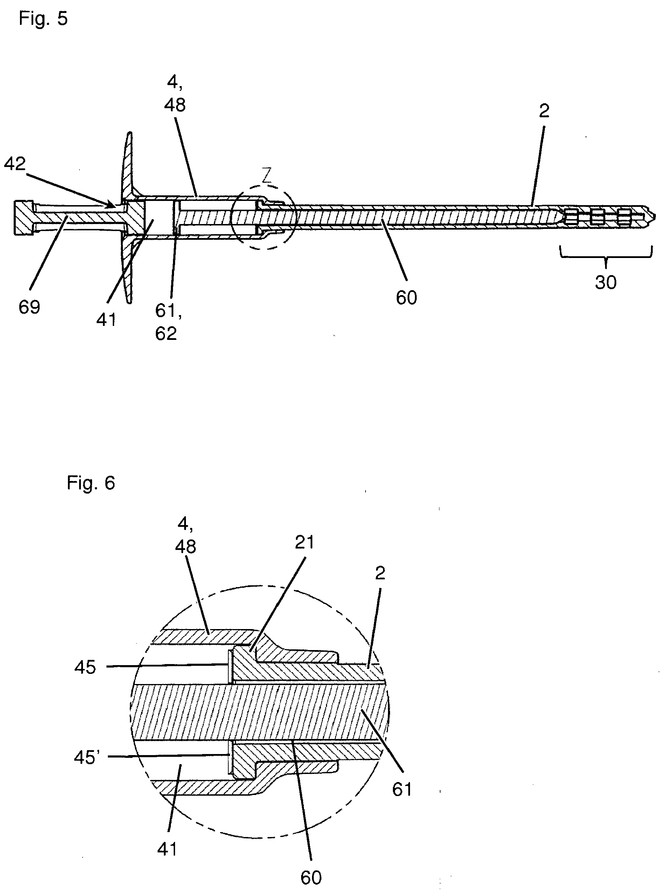

Wie insbesondere die Figuren 3, 4 und 6 zeigen, weist das Halteteil 4 Rastnasen 45, 45' auf, die ausgehend vom Hülsenteil 48 radial nach innen in den Durchgangskanal 41 ragen. Die beiden Rastnasen 45, 45' sind auf derselben Axialposition angeordnet und liegen auf einem Ring um die Längsachse des Ankers. Wenn der Bund 21 des Ankerteils 2 beim Zusammenfügen des Ankers diese Rastnasen 45, 45' passiert, kommt es dort zu elastischen Deformationen mit anschliessender Entspannung, so dass zwischen den Rastnasen 45, 45' und dem Bund 21 eine Rastwirkung gegeben ist. Beim zusammengefügten Anker hemmen somit die Rastnasen 45, 45' eine Bewegung des Bundes 21 und damit des Ankerteils 2 zum rückwärtigen Ende 84 des Halteteils 4 hin, nachdem der Bund 21 die Rastnasen 45, 45' zumindest teilweise passiert hat und am Anschlagelement 44 anliegt.

Wie die Figuren 3 und 4 zeigen, kann der axiale Abstand zwischen Anschlagelement 44 und Rastnasen 45, 45' so bemessen sein, dass der Bund 21 spielfrei zwischen den Rastnasen 45, 45' und dem Anschlagelement 44 aufgenommen ist, oder dass zumindest eine der Rastnase 45, 45' den Bund 21 sogar gegen das Anschlagelement 44 presst.

Wie Figur 3 weiter zeigt, kann das Anschlagelement 44 beispielsweise eine radial und/oder senkrecht zur Längsachse verlaufende Anschlagfläche 47 für den Bund 21 und der Bund 21 eine radial und/oder senkrecht zur Längsachse verlaufende korrespondierende Kontaktfläche 22 für das Anschlagelement 44 aufweisen.

Der Spreizkörper 61 kann auf seiner Rückseite einen querschnittsverbreiterten Kopf 62 aufweisen. Der Bund 21 kann auf seiner Rückseite eine Anschlagfläche 51 für diesen Kopf 62 bilden.

Im dargestellten Ausführungsbeispiel ist im Durchgangskanal 41 noch ein Stopfen 69 angeordnet, über den der Spreizkörper 61, insbesondere sein Kopf 62, mit Schlägen beaufschlagt werden kann.

## Patentansprüche

1. Dämmstoffanker mit
- einem Ankerteil (2), welches im Bereich seines vorderen Endes (81) einen Verankerungsbereich (30) zum Verankern an einem Bohrloch und im Bereich seines entgegengesetzten rückwärtigen Endes (82) einen radial nach aussen vorstehenden Bund (21) aufweist, und
- einem Halteteil (4) zum Sichern einer Dämmstoffplatte am Dämmstoffanker, wobei das Halteteil (4) aufweist:
• einen Durchgangskanal (41) zum bereichsweisen Aufnehmen des Ankerteils (2),
• am rückwärtigen Ende (84) des Halteteils (4) eine Einführöffnung (42) zum Einführen des Ankerteils (2) und des am Ankerteil (2) angeordneten Bundes (21) in den Durchgangskanal (41) und
• im Bereich des dem rückwärtigen Ende (84) des Halteteils (4) entgegengesetzten vorderen Endes (83) des Halteteils (4) ein Anschlagelement (44) für den in den Durchgangskanal (41) eingeführten Bund (21) des Ankerteils (2),
**dadurch gekennzeichnet,**
**dass** das Halteteil (4) zumindest eine Rastnase (45) zum Hemmen einer Axialbewegung des Bundes (21) des Ankerteils (2) vom Anschlagelement (44) hinweg aufweist, welche radial in den Durchgangskanal (41) vorsteht.

2. Dämmstoffanker nach Anspruch 1,
**dadurch gekennzeichnet,**
**dass** die Rastnase (45) zum Hemmen der Axialbewegung des Bundes (21) des Ankerteils (2) vom Anschlagelement (44) hinweg durch unmittelbaren Kontakt der Rastnase (45) mit dem Bund (21) vorgesehen ist.

3. Dämmstoffanker nach einem der vorstehenden Ansprüche,
**dadurch gekennzeichnet,**
**dass** der Bund (21) spielfrei zwischen dem Anschlagelement (44) und der Rastnase (45) aufgenommen ist, wobei die Rastnase (45) den Bund (21) gegen das Anschlagelement (44) drängt.

4. Dämmstoffanker nach einem der vorstehenden Ansprüche,
**dadurch gekennzeichnet,**
**dass** mehrere Rastnasen (45, 45') vorgesehen sind, die auf einem Ring angeordnet sind.

5. Dämmstoffanker nach einem der vorstehenden Ansprüche,
**dadurch gekennzeichnet,**
**dass** der Bund (21) endseitig am Ankerteil (2) angeordnet ist.

6. Dämmstoffanker nach einem der vorstehenden Ansprüche,
**dadurch gekennzeichnet,**
**dass** der Durchgangskanal (41) am Anschlagelement (44) ein globales Querschnittsminimum aufweist.

7. Dämmstoffanker nach einem der vorstehenden Ansprüche,
**dadurch gekennzeichnet,**
**dass** das Halteteil (4) einen Halteteller (49) für die Dämmstoffplatte aufweist.

8. Dämmstoffanker nach einem der vorstehenden Ansprüche,
**dadurch gekennzeichnet,**
**dass** das Ankerteil (2) einen Spreizkanal (60) zum Einführen eines Spreizkörpers (61) zum Aufspreizen des Verankerungsbereichs (30) aufweist.

## Claims

1. Anchor for insulating material having
- an anchoring part (2) which has, in the region of its front end (81), an anchoring region (30) for anchoring in a drilled or bored hole and, in the region of its opposite rear end (82), a collar (21) which projects outwards radially, and
- a retaining part (4) for securing a sheet of insulating material to the anchor for insulating material, the retaining part (4) having:
• a through-passage (41) for receiving a region of the anchoring part (2),
• at the rear end (84) of the retaining part (4), an insertion opening (42) for the insertion in the through-passage (41) of the anchoring part (2) and the collar (21) arranged on the anchoring part (2), and
• in the region of the front end (83) of the retaining part (4) opposite from the rear end (84) of said retaining part (4), an abutment element (44) for the collar (21) of the anchoring part (2) when inserted in the through-passage (41),
**characterised in that** the retaining part (4) has at least one latching nose (45), which projects into the through-passage (41) radially, for impeding axial movement of the collar (21) of the anchoring part (2) away from the abutment element (44).

2. Anchor for insulating material according to claim 1, **characterised in that** the latching nose (45) is intended for impeding axial movement of the collar (21) of the anchoring part (2) away from the abutment element (44) by direct contact of the latching nose (45) with the collar (21).

3. Anchor for insulating material according to either of the preceding claims, **characterised in that** the collar (21) is received between the abutment element (44) and the latching nose (45) without any play, the latching nose (45) thrusting the collar (21) against the abutment element (44).

4. Anchor for insulating material according to one of the preceding claims, **characterised in that** a plurality of latching noses (45, 45') are provided which are arranged in a ring.

5. Anchor for insulating material according to one of the preceding claims, **characterised in that** the collar (21) is arranged on the anchoring part (2) at the end thereof.

6. Anchor for insulating material according to one of the preceding claims, **characterised in that** the through-passage (41) has an overall minimum cross-section at the abutment element (44).

7. Anchor for insulating material according to one of the preceding claims, **characterised in that** the retaining part (4) has a retaining part flange (49) for the sheet of insulating material.

8. Anchor for insulating material according to one of the preceding claims, **characterised in that** the anchoring part (2) has an expanding passage (60) for the insertion of an expanding body (61) for expanding the anchoring region (30).

## Revendications

1. Ancrage en matériau isolant comportant :
- une partie d'ancrage (2) comportant une zone d'ancrage (30) dans la zone de son extrémité avant (81) pour un ancrage dans un trou foré et une collerette (21) faisant radialement saillie vers l'extérieur dans la zone de son extrémité arrière opposée (82), et
- une partie de retenue (4) pour bloquer une plaque en matériau isolant sur l'ancrage en matériau isolant, dans lequel la partie de retenue (4) comporte :
• un canal de passage (41) pour recevoir la partie d'ancrage (2) dans certaines zones,
• sur l'extrémité arrière (84) de la partie de retenue (4), une ouverture d'insertion (42) pour introduire la partie d'ancrage (2) et la collerette (21) agencée sur la partie d'ancrage (2) dans le canal de passage (41), et
• dans la zone de l'extrémité avant (83) de la partie de retenue (4) opposée à l'extrémité arrière (84) de la partie de retenue (4), un élément de butée (44) pour la collerette (21) de la partie d'ancrage (2) insérée dans le canal de passage (41),
**caractérisé en ce que** la partie de retenue (4) comporte au moins un tenon d'encliquetage (45) pour empêcher un mouvement axial de la collerette (21) de la partie d'ancrage (2) à partir de l'élément de butée (44), lequel tenon d'encliquetage fait radialement saillie dans le canal de passage (41).

2. Ancrage en matériau isolant selon la revendication 1, **caractérisé en ce que** le tenon d'encliquetage (45) est destiné à empêcher le mouvement axial de la collerette (21) de la partie d'ancrage (2) à partir de l'élément de butée (44) par un contact direct du tenon d'encliquetage (45) avec la collerette (21).

3. Ancrage en matériau isolant selon l'une des revendications précédentes, **caractérisé en ce que** la collerette (21) est reçue sans jeu entre l'élément de butée (44) et le tenon d'encliquetage (45), dans lequel le tenon d'encliquetage (45) pousse la collerette (21) contre l'élément de butée (44).

4. Ancrage en matériau isolant selon l'une des revendications précédentes, **caractérisé en ce que** sont prévus plusieurs tenons d'encliquetage (45, 45') qui sont agencés sur une bague.

5. Ancrage en matériau isolant selon l'une des revendications précédentes, **caractérisé en ce que** la collerette (21) est agencée, côté extrémité, sur la partie d'ancrage (2).

6. Ancrage en matériau isolant selon l'une des revendications précédentes, **caractérisé en ce que** le canal de passage (41) a un minimum de section transversale global sur l'élément de butée (44).

7. Ancrage en matériau isolant selon l'une des revendications précédentes, **caractérisé en ce que** la partie de retenue (4) comporte un disque de retenue (49) pour la plaque en matériau isolant.

8. Ancrage en matériau isolant selon l'une des revendications précédentes, **caractérisé en ce que** la partie d'ancrage (2) comporte un canal expansible (60) pour insérer un corps expansible (61) pour l'expansion de la zone d'ancrage (30).
